# EUROPEAN PATENT APPLICATION

(11) **EP 4 636 367 A1**
(43) Date of publication of application: **22.10.2025**
(21) Application number: 24171348.6
(22) Date of filing: 19.04.2024
(51) Int. Cl.: G01H 1/00, B04B 9/14, G01M 1/14

(54) **VIBRATION DETECTION IN A LABORATORY INSTRUMENT**

(71) Applicant: Thermo Electron LED GmbH, 37520 Osterode am Harz (DE)
(72) Inventor: LANGER, Daniel, 37520 Osterode am Harz (DE); KARL, Andreas, 37520 Osterode am Harz (DE)
(74) Representative: Boult Wade Tennant LLP

(57) **Abstract**

There is provided a method of identifying an operating state of a laboratory instrument for physical processing of one or more samples, the method comprising: obtaining vibration data from a vibration sensor mounted to the laboratory instrument, wherein the vibration data is obtained for each of at least two degrees of freedom and comprises acceleration data and/or angular velocity data; and determining at least one operating state of the laboratory instrument based on recognising one or more vibration patterns in the vibration data. A laboratory instrument for receiving one or more samples and processing the one or more samples is also provided.

## Description

### Technical Field

The present invention relates to laboratory instruments that include a moving mass. In particular, the present invention relates to detecting an operating state of a laboratory instrument, such as using a vibration sensor to determine if the instrument is balanced or if it is operating abnormally.

### Background

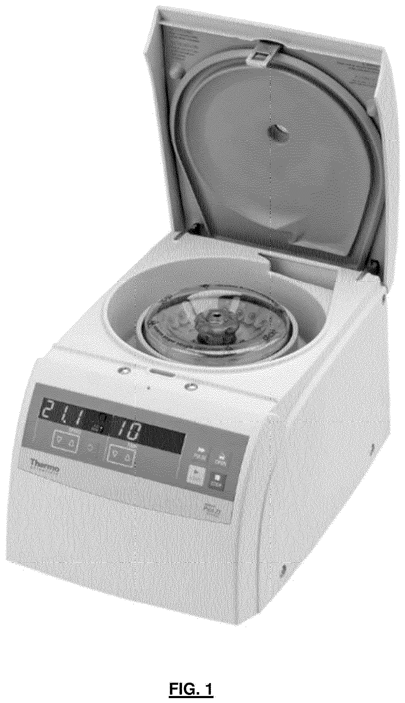

Laboratory instruments, such as centrifuges, that include a moving mass are susceptible to movement, for example when they are loaded with samples that results in them becoming unbalanced. For example, a laboratory centrifuge may have a rotor capable of receiving a number of samples, such as 24 samples, but if the samples are not loaded in a balanced way such as with equal size samples at each of the 24 sample locations or with less than 24 samples in a symmetric configuration, the instrument may be unbalanced when rotated. Often such centrifuges are supplied with rotors for different numbers of samples and/or different sizes of samples. However, when the number of samples does not match the number of loading positions the samples should be symmetrically or evenly spaced. This becomes more difficult with odd numbers of samples or even with rotors in which the samples are held in swing-out buckets. The high speed of rotation of the rotors for such laboratory centrifuges, for example speeds such as 14,000 revolutions per minutes (rpm), means that an unbalanced centrifuge can become damaged or move across the surface it is placed on. An example prior art bench top centrifuge is shown in figure 1. The rotor can be seen and may have 18 or 24 loading positions for receiving samples.

Prior art laboratory instruments of this kind use balance switches based on electromechanical operation for detecting movement of the instrument during operation, as may occur if the instrument loading is unbalanced. Balance switches may be based on a solenoid and lever arm, in which the lever arm moves under its own inertia when the instrument moves. If the movement is sufficient the arm contacts the solenoid completing a circuit and sending a signal to a controller in the instrument that the movement has exceeded a threshold. On receipt of such a signal the controller then stops operating the instrument such as by stopping the rotation by switching off power to a motor driving the rotation. Other types of balance and motion sensors are known and provide simple high/low or on/off signals when the motion exceeds a threshold.

In some prior art instruments two such balance switches may be used mounted in orthogonal direction to provide detection of movement in two directions such as vertically and horizontally.

A problem with prior art instruments is that the balance switch must be set to allow some limited vibration which is normal during the operation of the instrument and only trigger once a limit has been exceeded. If the balance switch is not set correctly the switch will trigger and the instrument will stop even if it is operating inside safe limits. Furthermore, the amount of movement of the instrument may depend on the conditions of the surface on which the instrument is placed. For free-standing instruments this may be the floor, whereas for work top instruments this may be the laboratory bench or work surface. Both types of surface may become wet which reduces the forces needed for the instrument to move on the surface. For example, centrifuges by their nature handle wet samples and in such an environment there is always the possibility of spills making the floor or bench wet. This reduces the amount of vibration that is required for an instrument to walk across the surface. Worktop instruments may also be affected by the stability of the surface they are located on. For example, if a worktop is not rigidly fixed may wobble or shake and this may result in the amount of movement of the instrument being greater than if the instrument was placed on a more rigid and stable surface. Again this may result in the balance switch prematurely triggering.

Furthermore, prior art instruments using balance switches have difficulty in detecting slow movement of the instrument during operation because the movement may be masked by the permitted vibration of the instrument.

Movement of laboratory equipment must be prevented for safety reasons for the user. Laboratory equipment that includes a moving mass may tend to start to move as soon as an imbalance occurs or if the imbalance exceeds a threshold. Such movement is more likely if the surface on which the instrument is located is slippery such as due to liquid on the surface. The movement of the laboratory instrument may result in damage to samples, damage to the instrument and may at least lead to an increase in the time and cost of the work being performed.

Accordingly, it is desirable to improve the monitoring of safe operation of laboratory instruments that have moving masses. For example, for instruments such as centrifuges.

### Summary of the Invention

The present invention provides a method of identifying an operating state of a laboratory instrument for physical processing of one or more samples. Physical processing includes moving the one or more samples to process them, such as agitating, oscillating or performing a reciprocating action on the one or more samples. The method comprises: obtaining vibration data from a vibration sensor mounted to the laboratory instrument. The vibration data is obtained for each of at least two degrees of freedom and comprises acceleration data and/or angular velocity data. The method further comprises: determining at least one operating state of the laboratory instrument, for example, based on recognising one or more patterns in the vibration data, using a trained machine learning model, or using a trained machine learning model to perform pattern recognition in the vibration data. Methods of pattern recognition, other than by a trained machine learning model, may be used.

The at least one operating state may indicate a normal or abnormal state of operation.

The at least one operating state may indicate a state of balance or imbalance of the laboratory instrument.

The use of at least two degrees of freedom has advantages over the prior art because it is less likely to generate false positives indicating an abnormal or imbalanced state when the instrument is operating safely, and more likely to accurately detect an imbalance or abnormal state when the instrument is at the edge of unsafe, abnormal or imbalanced operation. The advantage may be further enhanced by using a trained machine learning model and/or pattern recognition. A greater number of degrees of freedom may also be used.

The vibration data obtained for the at least two degrees of freedom may comprise acceleration data and/or angular velocity data. Alternatively, the at least two degrees of freedom may comprise acceleration data and/or angular momentum data.

Determining the at least one operating state of the laboratory instrument, using a trained machine learning model, may comprise generating, from the vibration data, a feature representation of the vibration data. The feature representations may comprise indications of one or more of: mean, energy, variance and/or peak-to-peak, for one or more of the at least two degrees of freedom. The feature representations may be supplied to the trained machine learning model.

The trained machine learning model or pattern recognition may determine the operating state of the laboratory instrument as one of one or more states. The one or more states may include states of: idle, substantially balanced operation and operating with excess imbalance.

The determined operating state may be an indication that the laboratory instrument is moving, is about to move, or has moved, in relation to a surface it is placed on.

The vibration data having at least two degrees of freedom may comprise acceleration data in three orthogonal directions and angular velocity data in three orthogonal directions. The multiple degrees of freedom, such as these six degrees of freedom, may all be collected or generated by one sensor device, unit or chip, such as a MEMS sensor.

The trained machine learning model may be a classifier such as a decision tree classifier type machine learning model.

The decision tree classifier type machine learning model may comprise any of a J48 classifier, random forest, random tree or decision stump. J48 is preferred due to the increased accuracy over other classifiers.

The obtained vibration data may comprise high pass filtered vibration data.

The method may further comprise stopping operation of the laboratory instrument based on the determined operating state.

The machine learning model may analyse the vibration data for movement or vibration patterns that it has learned lead to, or are an indication of, unsafe, abnormal or imbalanced operation.

The present invention further provides a method of training a vibration classification machine learning model of a laboratory instrument for physical processing one or more samples. Physical processing includes moving the one or more samples to process them, such as agitating, oscillating or performing a reciprocating action on the one or more samples. The method comprises: obtaining labelled vibration data of the laboratory instrument in one or more operating states, the labelled vibration data obtained for at least two degrees of freedom; determining feature representations characterizing the labelled vibration data; and training the machine model based on the feature representations to determine an indication of the one or more operating states of the laboratory instrument.

The at least one operating state may indicate a normal or abnormal state of operation.

The at least one operating state may indicate a state of balance or imbalance of the laboratory instrument.

The labelled vibration data may comprise vibration data collected during operation of the laboratory instrument in the one or more operating states.

The labelled vibration data may represent, or encode, one or more runs of the instrument at each of the one or more operating states.

The vibration data obtained for the at least two degrees of freedom may comprise acceleration data and/or angular velocity data. Alternatively, the at least two degrees of freedom may comprise acceleration data and/or angular momentum data.

The feature representations may comprise indications of one or more of: mean, energy, variance and/or peak-to-peak, for one or more of the at least two degrees of freedom.

The one or more operating states of the laboratory instrument may comprise one or more of: idle, substantially balanced operation and operating with excess imbalance.

The vibration data having at least two degrees of freedom may comprise acceleration data in three orthogonal directions and angular velocity data in three orthogonal directions. The multiple degrees of freedom, such as these six degrees of freedom, may all be collected or generated by one sensor device, unit or chip, such as a MEMS sensor.

The machine learning model may be a classifier such as a decision tree classifier type machine learning model.

The decision tree classifier type machine learning model may comprises any of a J48 classifier, random forest, random tree or decision stump. J48 is preferred due to the increased accuracy over other classifiers.

The obtained labelled vibration data may comprise high pass filtered vibration data.

The present invention further provides a method of training a vibration classification machine learning model of a laboratory instrument for physical processing of one or more samples and using the trained machine learning model to identify an operating state of the laboratory instrument, the method comprising: obtaining labelled vibration data of the laboratory instrument in one or more operating states, the labelled vibration data obtained for at least two degrees of freedom; determining feature representations characterizing the labelled vibration data; training the machine model based on the feature representations to determine an indication of the one or more operating states of the laboratory instrument; obtaining operational vibration data from a vibration sensor mounted to the laboratory instrument, the vibration data obtained for each of at least two degrees of freedom; and determining at least one operating state of the laboratory instrument based on the vibration data using the trained machine learning model. This method may be combined with any of the features described in the preceding paragraphs.

The present invention further provides a laboratory instrument for receiving one or more samples and processing the one or more samples, the laboratory instrument comprising: a processing element for receiving the one or more samples, the processing element arranged to be moved by the laboratory instrument to physically process the one or more samples, wherein movement of the processing element during operation of the instrument causes vibration of the laboratory instrument; a vibration sensor configured to detect vibration of the laboratory instrument in at least two degrees of freedom; and a processor configured to perform the methods of identifying an operating state of the laboratory instrument as described herein. Physical processing includes moving the one or more samples to process them, such as agitating, oscillating or performing a reciprocating action on the one or more samples.

The processing element is arranged to be moved by the laboratory instrument in an oscillating or reciprocating action to physically process the sample. The processing element may comprise a rotor for receiving samples such as sample tubes at sample locations.

The vibration sensor may comprise a gyroscope and/or an accelerometer.

The at least two degrees of freedom may comprise: acceleration data in at least two orthogonal directions; angular velocity or angular momentum data in at least two orthogonal directions; or acceleration data in one direction and angular velocity/momentum data in one direction.

The vibration sensor may be a multi-axis vibration sensor such as a MEMS sensor.

The laboratory instrument may be any of: a centrifuge, a shaker, a mixer, a mill, a blender, an incubator with integrated shaker, a rotary tumbler, and a robot.

The present invention further provides a computer-readable medium storing instructions which, when executed by a processor, causes the processor to carry out the methods as set out herein. The present invention further provides a computer programmed with instructions which, when executed by a processor of the computer, causes the processor to carry out the methods as set out herein.

### Brief Description of the Drawings

Embodiments of the present invention, and aspects of the prior art, will now be described with reference to the accompanying drawings, of which:
figure 1 is a photo of a bench top centrifuge according to the prior art;
figure 2 is a block diagram of a laboratory instrument according to the present invention;
figure 3 is a flow chart of a method of identifying an operating state of a laboratory instrument for physically processing one or more samples, according to the present invention;
figure 4 is a flow chart of a method of training a vibration classification machine learning model of a laboratory instrument for processing one or more samples, according to the present invention;
figure 5 is a flow chart of a method similar to figure 3 for identifying an operating state of a laboratory instrument for physically processing one or more samples, according to an embodiment of the present invention;
figure 6 is a flow chart of a method similar to figure 4 for training a vibration classification machine learning model of a laboratory instrument for physically processing one or more samples, according to an embodiment of the present invention;
figure 7 is a block diagram of a laboratory instrument according to embodiments of the present invention;
figures 8a-8c are graphs of acceleration of a laboratory instrument measured in each of three directions under three different loading conditions of the instrument;
figures 9a-9c are graphs of angular velocity of a laboratory instrument measured in each of the three directions under three different loading conditions of the instrument;
figure 10 is block diagram of sensor hardware according to embodiments of the present invention;
figure 11 is a block diagram of the architecture of the machine learning model and its interactions within the laboratory instrument 300 according to an embodiment of the present invention;
figures 12A and 12B are graphs of vibration data obtained from a six axis vibration sensor that may be used for training a machine learning model; and
figure 13 is a schematic illustration of an example computer system.

### Detailed Description

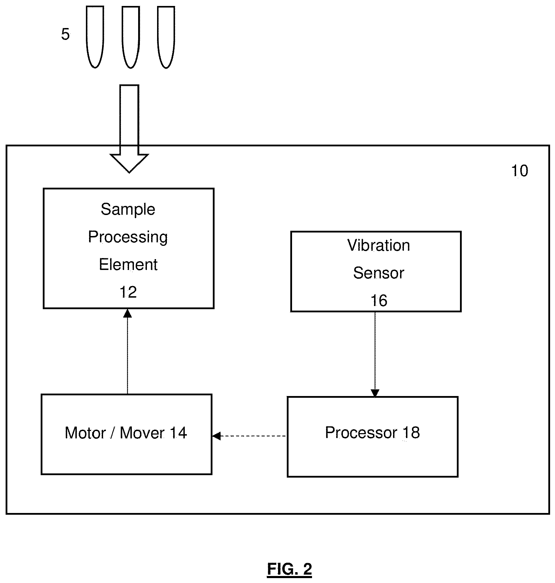

Figure 2 is a block diagram of a laboratory instrument 10 according to the present invention. The laboratory instrument comprises a processing element 12 such as for processing one or more samples 5. The laboratory instrument may further comprise a motor, or moving element, 14, for physically processing the one or more samples by moving the processing element and/or one or more samples, such as in an oscillating or reciprocating action. The moving or processing of the one or more samples during operation of the laboratory instrument causes vibration of the instrument. The moving or processing of the one or more samples by the laboratory instrument may be any one or more of: rotating, shaking, mixing, milling, blending, tumbling or movement by a robot such as a robotic arm. The laboratory instrument 10 further comprises a vibration sensor 16 configured to detect vibration of the instrument in at least two degrees of freedom, and a processor 18. Processor 18 may be a microprocessor, for example, configured to determine at least one operating state of the laboratory instrument based on the vibration data. The processor may use a trained machine learning model to determine the at least one operating state. Alternatively, pattern recognition may be used to determine the at least one operating state. The at least one operating state may indicate a state of normal or abnormal operation such as a state of balance or imbalance of the laboratory instrument. By using a machine learning model or pattern recognition on two or more degrees of freedom of vibration data a more reliable assessment of the operating state of the laboratory instrument many be obtained compared to prior art instruments.

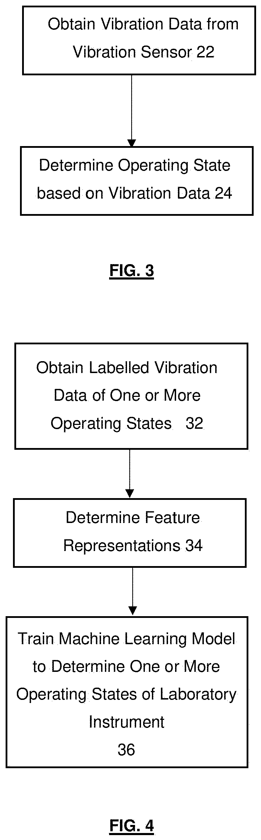

Figure 3 is a flow chart of a method of identifying an operating state of a laboratory instrument for physically processing one or more samples, according to the present invention. The method comprises obtaining vibration data, 22, from a vibration sensor mounted to the laboratory instrument. The vibration data is obtained for each of at least two degrees of freedom. Degrees of freedom may comprise orthogonal directions of acceleration or angular velocity or a combination thereof. The method further comprises determining, 24, at least one operating state of the laboratory instrument based on the vibration data, for example using pattern recognition and/or using a trained machine learning model.

In the embodiment shown in the block diagram of figure 2, or the flow chart of figure 3, the use of pattern recognition has been identified for determining the at least one operating state of the laboratory instrument based on vibration data. Pattern recognition may be used to detect a pattern within the at least two degrees of freedom. In embodiments this may comprise identifying a phase shift or quotient of the values or data, for example, from the different degrees of freedom.

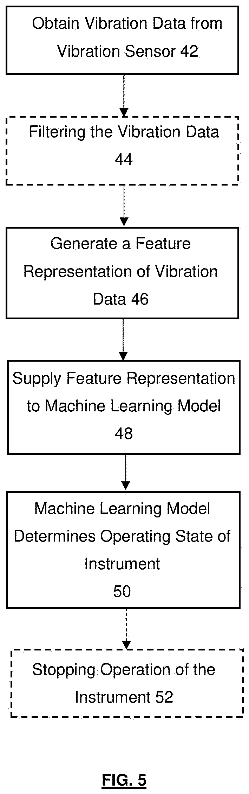

Figure 5 shows a flow chart of a method similar to figure 3 for identifying an operating state of a laboratory instrument for physically processing one or more samples. Figure 5 includes the use of a machine learning model. The flow chart starts at step 42 with obtaining vibration data from a vibration sensor. The vibration data may be measured by the vibration sensor and is preferably analysed in real time. Having obtained the vibration data, optionally the vibration data may be filtered such as by passing through a high pass filter, as shown at step 44. In step 46 which follows a feature representation is generated. This may comprise indications of one or more of: mean, energy, variance and/or peak-to-peak, for one or more of the at least two degrees of freedom. The feature representations at step 48 are then supplied to the trained machine learning model. The trained machine learning model may a classifier type machine learning model such as a decision tree classifier type machine learning model. In embodiments the decision tree type classifier may comprise any of: a J48 classifier, random forest classifier, random tree classifier, decision stump or other types of classifier. At step 50 the machine learning model may determine the operating state of the instrument, for example, this may be a normal or abnormal state of operation. The machine learning model may determine the state of operation to be a state of balance or a state of imbalance. Alternatively, the machine learning model may determine the state of operation of the laboratory instrument to be: idle, substantially balanced operation, or operating with excess imbalance. For each of these various alternatives of groups of operating states the machine learning model my classify the state of the instruments based on the data. In some embodiments, for example, where there are just two defined states the machine learning model may classify the instrument based on the data to one of these states and if the data cannot be classified into the one state it may be inferred that the instrument is in the other state. Alternatively, the machine learning model may classify the instrument based on the data into either of the two states directly. Where three or more states are provide, the machine learning model may directly classify the instrument based on the data into any of the three or more states, or may classify the instrument into any of two or more states and if the data cannot be classified into the two or more state sit may be inferred that the instrument is in the other state. In one embodiment the machine learning model may classify the instrument based on the data into operating states of: the laboratory instrument is moving, the laboratory instrument is about to move, or the laboratory instrument has moved, in relation to a surface it is placed on. Following classification and determining the operating state, if the operating state is determine to be any of: an abnormal state of operation, an operating but unbalanced state of operation, or a state of operating with excess imbalance, a processor such as processor 18 may stop operation of the instrument or may send a signal to a controller of the sample processing element 12 to stop operation of the instrument. Such as step is shown in figure 5 at step 52. In other embodiments when such a determination of operating state is made a warning, such as a visual warning on a user interface or an audible warning, may be issued to a user.

Figure 4 is a flow chart of a method of training a vibration classification machine learning model of a laboratory instrument for processing one or more samples, according to the present invention. The method comprises obtaining labelled vibration data of one or more operating states of the laboratory instrument, as shown at step 32. The labelled vibration data may be vibration data obtained from the instrument and labelled based on user observation, for example, whether the instrument was unbalanced or moving. The labelling may alternatively be done using additional sensors, cameras or other devices that can detect the state of the instrument but are not included in the instrument such as because they would be too bulky or cumbersome. Based on the determination a processor may label the data accordingly. The labelled vibration data is obtained for at least two degrees of freedom. These will be the same degrees of freedom as discussed previously in relation to figures 3 and 5. Feature representations are determined at step 34 from the vibration data. The feature representation may comprise indications of one or more of: mean, energy, variance and/or peak-to-peak, for one or more of the at least two degrees of freedom. At step 36 of figure 4, based on the feature representations, the machine learning model is trained to determine an indication of one or more operating states of the laboratory instrument.

In an embodiment of the present invention the steps of figures 3 and 4 may be combined to produce a method of training a vibration classification machine learning model of a laboratory instrument and then identifying an operating state of the laboratory instrument for physically processing one or more samples.

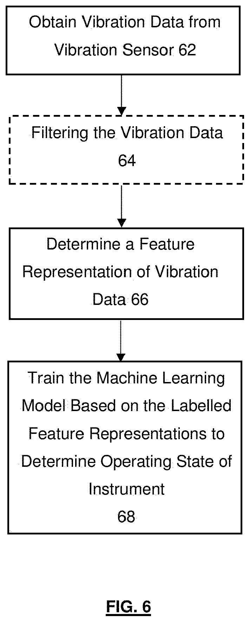

Turning to figure 6 there is shown a flow chart of a method similar to figure 4 for training a vibration classification machine learning model of a laboratory instrument for physically processing one or more samples. The embodiments of figure 6 we now describe can include any of the features described in relation to figure 4. The method of figure 6 may start by obtaining labelled vibration data of the laboratory instrument in one or more operating states, as shown at step 62. The labelling may performed as described in relation to the method of figure 4. The labelled vibration data for the one or more operating states of the laboratory a normal state of operation and/or an abnormal state of operation. In embodiments, the labelled data may be for a state of balance and/or a state of imbalance. More detailed states may be determined, such as: idle, substantially balanced operation, or operating with excess imbalance. In one embodiment the labelled vibration data may be labelled for operating states of: the laboratory instrument is moving, the laboratory instrument is about to move, or the laboratory instrument has moved, in relation to a surface it is placed on. Other labelled operating states may be added to any of these examples of operating states, or a different set of operating states related to vibration and/or movement of the instrument may be provided. The labelled vibration data may represent one or more runs of the instrument at each of the one or more operating states. For example, multiple runs or sets of data may be collected for each operating state and labelled according to the operating state.

The labelled vibration data may comprise vibration data obtained for at least two degrees of freedom. The at least two degrees of freedom may be in acceleration data and or angular velocity or angular momentum data such as may be collected from an accelerometer or gyroscope. The at least two degrees of freedom may be solely in acceleration, such as at least two orthogonal directions. Alternatively, the at least two degrees of freedom may be solely in angular velocity or angular momentum such as at least two orthogonal rotation directions. In a further alternative the two orthogonal directions may be a combination of acceleration and angular velocity/momentum. For example, they may include one or more directions of acceleration and one or more rotational directions of angular velocity. If the degrees of freedom comprise one a combination of acceleration and angular velocity data, the angular velocity data is not required to be orthogonal to the acceleration data. However, for multiple degrees of freedom in one of acceleration or angular velocity or angular momentum, the degrees of freedom in each should be orthogonal. We may use the term angular velocity and angular momentum interchangeably, because angular momentum is linked to angular velocity by the mass of the moving element in the sensor, which is unchanging.

At step 64 in figure 6 the labelled vibration data is shown as optionally being filtered. For example, the labelled vibration data may be high pass filtered. At step 66 of figure 6, feature representation are determined. The feature representations may comprise indications of one or more of: mean, energy, variance and/or peak-to-peak, for one or more of the at least two degrees of freedom. For example, the data collected, such as for each run, may be processed to produce feature representations by calculating a mean, energy or other of the indications mentioned above over a time window and may be calculated for each degree of freedom. In embodiments six degrees of freedom of labelled vibration data may be obtained which comprises three orthogonal degrees of freedom in acceleration (such as directions x, y and z) and thee orthogonal degrees of freedom in angular velocity (such as yaw, pitch and roll, or rotations about the x, z, and z axes).

As shown at step 68 in figure 6 the machine learning model is trained based on the feature representations to determine an indication of the one or more operating states of the laboratory instrument. The machine learning model may be classifier such as a decision tree classifier type machine learning model. The decision tree classifier type machine learning model may comprise any one of a J48 classifier, random forest, random tree or decision stump. In embodiments, the J48 classifier may be used due to greater accuracy, as will be described later.

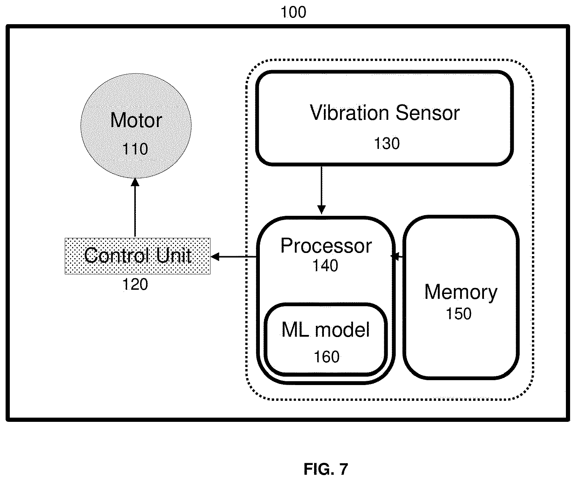

Figure 7 is a block diagram of a laboratory instrument according to embodiments of this disclosure. The instrument 100 may be a centrifuge although the disclosure is not limited to such devices. The instrument comprises a motor 110 or mover which is arranged to move a mass within the instrument. For example, for a centrifuge the mass that is moved may be a rotor comprising samples and the movement is rotation of the rotor about its axis. The motor 110 may be controlled by a control unit 120 which may, for example, control the speed of rotation or other movement and the length of time the motor is run. The speed and duration may be input by a user at a user interface or may be controlled by a separate computing device. The laboratory instrument further comprises a vibration sensor 130. The vibration sensor may be a MEMS (Microelectromechanical system) sensor. The sensor may comprise an accelerometer or a gyroscope or both. The accelerometer may detect acceleration in one, two or three directions. For example, the accelerometer may detect the magnitude of acceleration in each of x, y and z directions. Similarly, the gyroscope may detect angular velocity in one, two or three directions. For example, the gyroscope may detect the magnitude (and direction such as positive or negative direction) of angular velocity in each of (or about each of) x, y and z directions. If the vibration sensor comprises only an accelerometer then it is preferred that the accelerometer measures acceleration in two directions to provide acceleration measurements in two degrees of freedom. For example, the two directions may be the two linear directions (x, y) forming a plane parallel to the base of the laboratory instrument. If the vibration sensor comprises only a gyroscope then it is preferred that the gyroscope measures angular velocity in two directions to provide angular velocity measurements in two degrees of freedom. For example, the two directions may be the rotation about the two directions (x, y) forming a plane parallel to the base of the laboratory instrument. Rotation about these two directions may be known as yaw (x) and pitch (y) respectively. Rotation about a vertical axis (z) may be known as roll. Alternatively, if the vibration sensor comprises an accelerometer and a gyroscope then measurement of acceleration in one direction and measurement of angular velocity in one direction may be sufficient. The directions of measurement may be the same or different. The vibration sensor, which may be a multi-axis sensor, may be mounted within the laboratory instrument. Preferably, the sensor is mounted close to the motor or rotor for sensing of the vibrations and movement.

The laboratory instrument may further comprise a processor 140 and memory 150. The processor is programmed to run a machine learning model 160. Alternatively, the processor may perform pattern recognition. The vibration sensor 130 provides vibration data to a processor 140. The vibration data is collected at repeated time intervals such as many times per second. The vibration data may be stored in memory 150. The vibration data is collected to provide a time-varying or temporally-varying indication of the acceleration and/or angular velocity experienced by the instrument. Preferably the vibration sensor is mounted close to the motor or rotation axis of the rotor. In embodiments, the control unit may be combined into the processor 140 and memory 150.

In embodiments, the machine learning model 160, which as discussed is preferably a classifier, has been trained with vibration data according to at least two degrees of freedom for at least one operating state of the laboratory instrument. For example, the at least one operating state may include: operating normally in balanced mode and operating unbalanced. The machine learning model receives as inputs the time varying vibration data in two degrees of freedom and performs classification on the data to determine the status of operation of the laboratory instrument. If the machine learning model determines that the instrument is operating unbalanced it sends a signal to control unit 120 to stop the instrument, that is, to turn off the motor. This may be done with immediate effect or the motor may be turned off in a controlled manner by slowing down the motor speed first. In alternative configurations (or in addition to stopping the instrument) the control unit or processor may provide an alert to a user such as on a display or of an audible nature.

In one embodiment a multi-axis sensor unit that is capable of measuring acceleration in three directions (x, y and z) and also angular velocity or twist around two or three axes is used as the vibration sensor. Preferably, the sensor unit includes an on-board processor for analysis of the measured vibration using the machine learning model. The model may analyse the vibration data to look for indications of movement of the whole instrument such as walking across a surface.

The instrument of figure 1, which is a prior art laboratory centrifuge, accepts microliter tubes at the sample loading positions on the rotor. The instrument weighs around 10 kg and, hence, the forces due occurring when unbalanced become significant. Such an instrument can provide a centrifugation force of around 21,000 x g. An imbalance of one tube weighing around 4 grammes would result in a centrifugation force of around 8.5 kg. The instrument may have suspension which will absorb some of the force but nevertheless such large forces mean the instrument is still likely to move, with the likelihood of the unit moving increasing if the floor or surface on which it is located is slippery or wet.

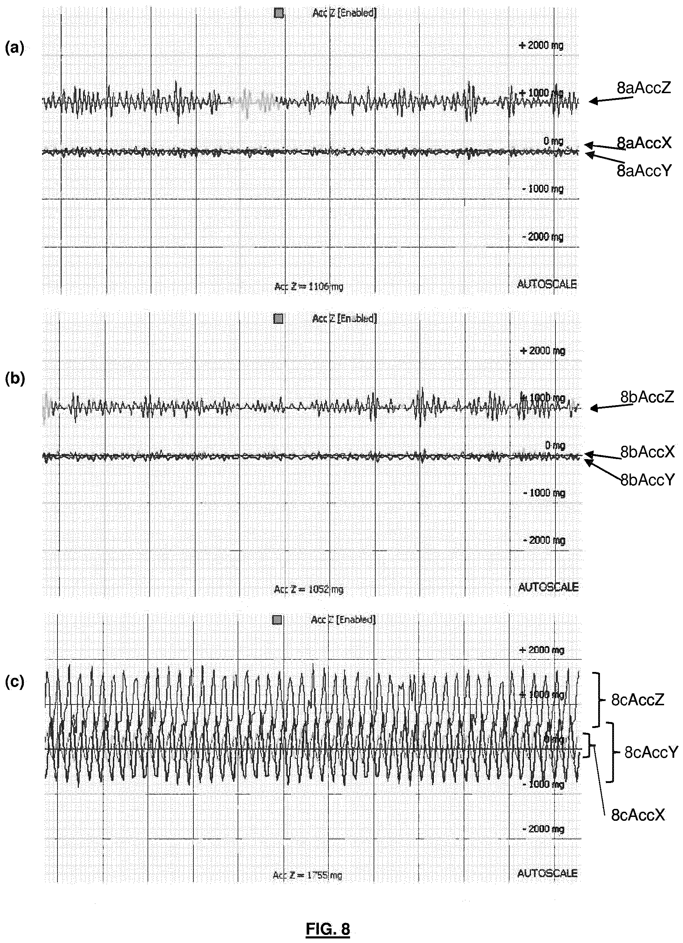

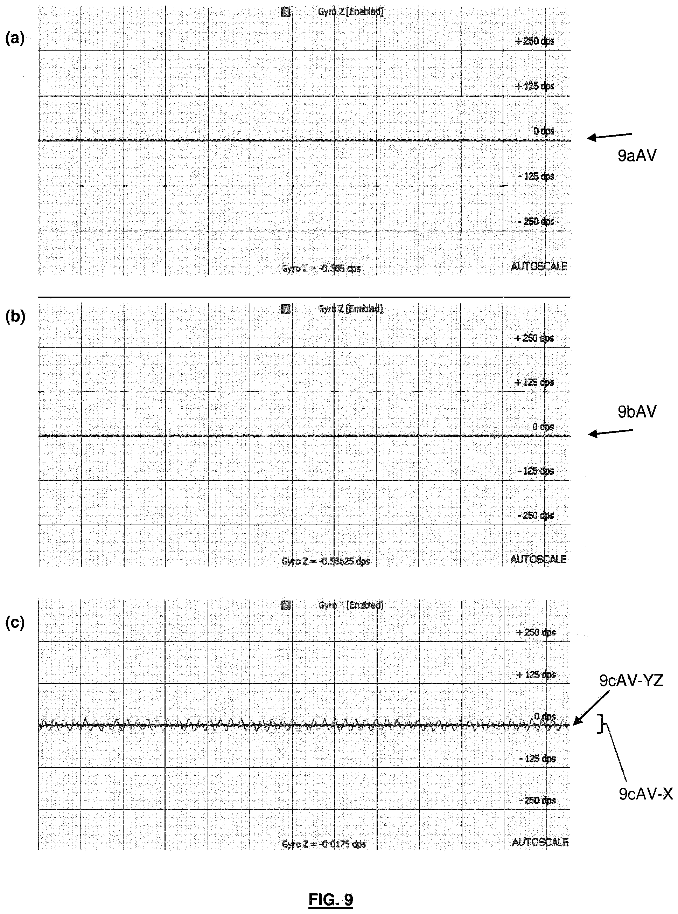

Figures 8a-8c and 9a-9c show measurements taken using a multi-axis sensor having six degrees of freedom, that is a multi-axis sensor capable of measuring acceleration and angular velocity in three orthogonal directions x, y and z. Directions x and y may be directions in the horizontal plane of the instrument and z may be the vertical direction through the instrument. Figures 8a-8c show acceleration measured in each of the three directions under three different loading conditions of the instrument.

Figure 8a shows measurements of acceleration in the x, y and z directions in which there is no load, that is the instrument is not moving the moving mass in the instrument. The data collected for figures 8b and 8c relates to a centrifuge rotating a rotor having samples therein. For figure 8a the rotor and samples are at rest. The horizontal axis is time, with each square corresponding to 5ms. The acceleration on the vertical axis is in units of mg, that is 1/1000 x the acceleration due to gravity. Each large square on the vertical axis is 1000mg. The three traces shown in figure 8a show acceleration in the x, y and z directions and are respectively labelled as 8aAccX, 8aAccY and 8aAccZ. The acceleration in the x and y directions are close to zero whereas the acceleration in the z-direction is around 1000mg or 1x the acceleration due to gravity (9.81 m/s²). There is some variation in the z-direction although this appears to be random. The value in the z-direction is the acceleration on the sensor due to gravity.

Figure 8b shows the acceleration with the centrifuge operating at full load, that is the rotor is fully loaded and so is balanced. In this example, the rotor is a 24 x 2mL rotor which is rotated at 12,000rpm. Similar to figure 8a the measured accelerations in x and y directions are close to zero as indicated respectively by traces 8bAccX and 8bAccY. The acceleration in the z direction is also similar to figure 8a with an acceleration of around 1000mg.

Figure 8c shows the acceleration with the centrifuge operating at an uneven loading condition. In this example the uneven loading condition used the same 24x2mL rotor as for figure 8b but instead of being fully loaded was loaded with just one 2mL tube. Oscillations can be seen in the traces for all three acceleration directions. The acceleration in the z direction (8cAccZ) is offset such that the oscillations are centred at about 1000mg with a variations of around +/- 700mg. The y direction acceleration (8cAccY) is centred about zero with a variation of around +/- 600mg. The x direction acceleration (8cAccZ) is smaller at around +/- 300mg. Hence, the difference in measured accelerations can be seen for the unbalanced condition compared to the other conditions.

Figures 9a-9c show similar results for angular velocity measured by the gyroscope part of the sensor. For the unloaded condition and the loaded but balanced conditions the angular velocity in all three direction is close to zero, as shown at 9aAV and 9bAV in figures 9a and 9b. Figure 9c shows the unbalanced loaded condition. Here an oscillation in the angular velocity in the x direction is seen at trace 9cAV-X. The scale on the graphs is 125dps (degrees per second) per square. The angular velocity in the x direction is around 13 dps, whereas in the y and z directions is small at less than around 3dps as shown in traces 9cAV-YZ. For the loading condition used here, some of the degrees of freedom show little change when the instrument is unbalanced whereas other show significant change. Hence, although we have described six degrees of freedom it is possible to use less than this number.

The sensor outputs amplitudes for acceleration and angular velocity will vary dependent on the instrument vibration and movement. A machine learning model or pattern recognition is used to identify the status of the instrument and whether it is operating unbalanced and may begin to move. By obtaining multiple varying values from the sensor and using a machine learning model or pattern recognition a more sophisticated analysis of vibration, vibration patterns and movement may be performed that reduce the likelihood of false positives which result in the instrument having to be stopped when actually it is operating safely. Hence, the present invention has advantages over the prior art limit switch type balance switches that simply turn-off the device when a limit is exceeded. Furthermore, machine learning is more flexible than limit switches because the machine learning model can be taught for different circumstances such that even if the behaviour of the instrument changes, the machine learning model will be able to correctly determine the instrument status. Transferring the system to other laboratory products is straight forward because the machine learning core just has to be trained accordingly. As mentioned, if the sensor includes on-board processing power the machine learning enabled sensor will not add to, and will even reduce, the processing load on the application and microprocessor controlling the instrument. Hence, the microcontroller can focus on running the application and will be notified if an imbalance is present. Moreover, during data mining and learning the power consumption of the instrument microcontroller can be reduced by implementing such data mining and learning inside the sensor chip. Pattern recognition has similar advantages.

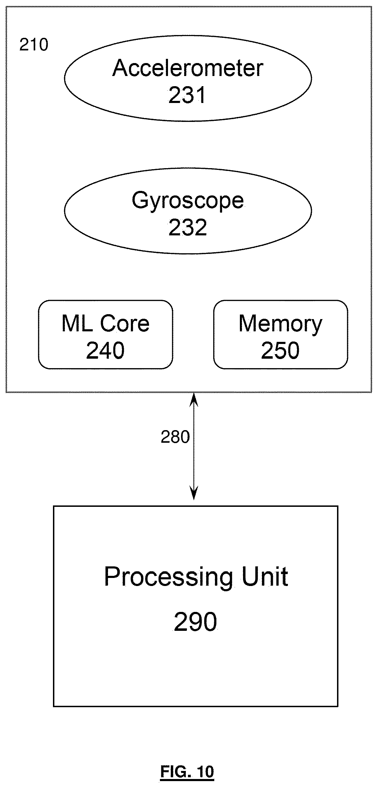

Figure 10 is block diagram of sensor hardware that may be used for the present invention. The sensor 210, such as multi-axis sensor device, may be a single electronic chip, unit or module and may comprise an accelerometer 231 and a gyroscope 232. The sensor may also have on-board processing capability such as a processor core that is compatible with and loaded with a machine learning model, as indicated by machine learning, ML, core 240 in figure 10. The sensor may include a memory 250 for storing measured data from the accelerometer and gyroscope, as well as the algorithm and parameters for the machine learning model. The memory may be an inbuilt voltaic memory. The sensor 210 is configured to communicate with another processing unit 290 such as the processor of control unit 120 of the laboratory instrument 100. The communication may be through a communications interface such as through an I²C and/or SPI serial interface. The communications interface may allow data from the gyroscope and accelerometer to be passed to the control unit. For example, the registers of memory storing measurement data may be accessed over the interface. However, more preferably processing and analysis of sensor is performed on chip and the sensor provides a signal to the control unit if the unit is operating unbalanced, is moving, or is operating in another abnormal state, and should be stopped. In one embodiment the multi-axis sensor is an iNEMO inertial module LSM6DSOX by ST Microelectronics but other sensors may be used.

We now describe more information regarding the machine learning model, including the type of machine learning model, training of the model and the different operating states of the laboratory instrument that may be determined.

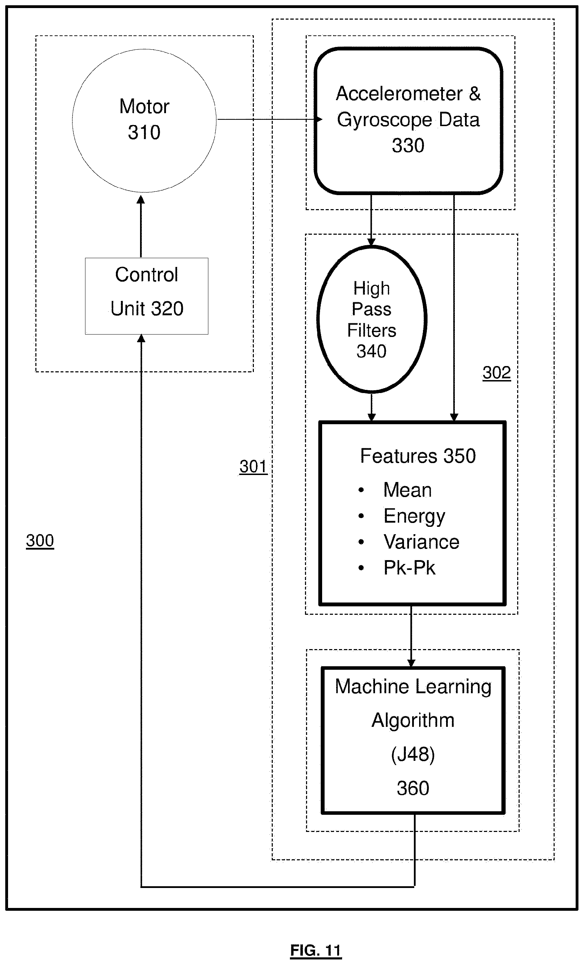

Figure 11 is a block diagram showing an embodiment of the architecture of the machine learning model and its interactions within the laboratory instrument 300, such as a centrifuge. The machine learning model described herein may be applied to, or combined with, any of the other embodiments of instrument described here such as instruments 10 and 100 of figures 2 and 7. Returning to figure 11, the laboratory instrument may comprise a motor 310 such as for driving rotation of the centrifuge rotor. The motor is controlled by control unit 320 which may set the speed of the motor and turn the motor on and off. Sensor, for example, sensor chip or module is indicated at 301 by a dashed line and comprises the gyroscope and accelerometer which measure acceleration and/or angular velocity in one, two or three directions, to produce accelerometer and gyroscope data 330. The data is fed to filtering and feature representation determination unit 350, which is indicated by dashed line 302 in the figure. Unit 302 may perform two functions, namely filtering and feature extraction. Filtering may be optionally performed on the data received from the gyroscope and accelerometer to remove unwanted noise. The filtering used may be a high pass filter and, if the sensor is a six-axis sensor, may be used on data for each axis or degree of freedom. A high pass filter used may have a bandwidth (or high frequency roll-off) of 26 Hz to remove low frequency noise.

At 350 in figure 6 feature representations are determined, which preferably includes calculating from the sensor data the following parameters:
- Mean;
- Energy;
- Variance; and
- Peak to peak.

The mean is calculated as the average of the selected input (I) in a defined time window. The energy is calculated as the sum of the squares (I²) of the selected input in the defined time window. The variance and peak-to-peak are calculated with regard to the selected input in the defined time window. The selected input may be any or all of the measured data values collected by the gyroscope and accelerometer. For example, the selected inputs may be angular velocity in each of x, y and z directions and acceleration in each of x, y and z directions. The time window may be in the range of 1 to 3 seconds or more, or may be less than this such as 0.5 seconds.

As indicated in figure 11 some of the measurement data may be filtered by high pass filter before the features are determined, whereas other measurement data is used without filtering for determining feature values. For example, acceleration values may be filtered whereas angular velocity values may be unfiltered, or vice versa.

After determining the feature representations these are passed to the machine learning algorithm. As we will describe below this may be a classifier such as the J48 algorithm. The machine learning algorithm may classify the state of the instrument into one or more operating states. For example, the classifier may look for a single state of:
i. Unbalanced / operating unsafely,
where the machine learning model determines that the feature representations received indicate a classification that the instrument is operating unsafely. For example, this may be because the classifier considers the instrument is unbalanced and/or the unbalance is sufficient to be considered unsafe such as because damage to the instrument or movement of the instrument across a work surface may occur. In this embodiment the classifier may check for the above state and determine whether the above state is met or not. Hence, the classifier may return a result of unbalanced / operating unsafely or not classified. The output will depend on the number of states the machine learning model has been trained to look for.

In other embodiments the machine learning model may be trained to classify the feature representations / vibration data into states of:
i. Unbalanced / operating unsafely, and
ii. Balanced / safe.

The second state (ii) here includes both operating balanced / safely or without imbalance that is unsafe and also includes idle.

A further embodiment provides a machine learning model trained to classify the vibration data into states of:
i. Unbalanced / operating unsafely,
ii. Balanced and operating, and
iii. Idle.

The idle state indicates that the instrument is not operating, that is, the motor and rotor are not turning.

A further embodiment may provide a machine learning model trained to classify the vibration data into states of:
i. Idle, instrument not operating/processing samples,
ii. Instrument accelerating to operating speed, without imbalance,
iii. Instrument accelerating to operating speed, with imbalance,
iv. Instrument operating but with critical imbalance, and
v. Instrument has moved or is moving due to imbalance.

By critical imbalance we mean the imbalance is sufficient to result in unsafe operation such as leading movement of the instrument.

The machine learning model is trained with data captured by an instrument. The instrument would likely be an instrument of the same type or model, or same rotor size and capacities and motor configuration. The same machine learning model, one trained on one instrument of a type or model may be used on other units of the same type or model. For slight differences in model or type an modified model nay be required, whereas for different models or types of instrument a new machine learning model may need to be trained.

As part of the training, samples of various vibration patterns are captured and used for building the machine learning model. Supervised learning technique is used and the sensor data or features are labelled by the type of vibration pattern, such as balanced, unbalanced, and idle. Qualitative or categorical data is used for training the model. The training data covers all the classifications included in the model. The ML core is able to distinguish between movement of the instrument and vibration.

Pattern recognition may be used instead of, or in combination with, a machine learning model to determine an operating state, including determining whether the instrument is operating according to the various group of states set out in the preceding paragraphs.

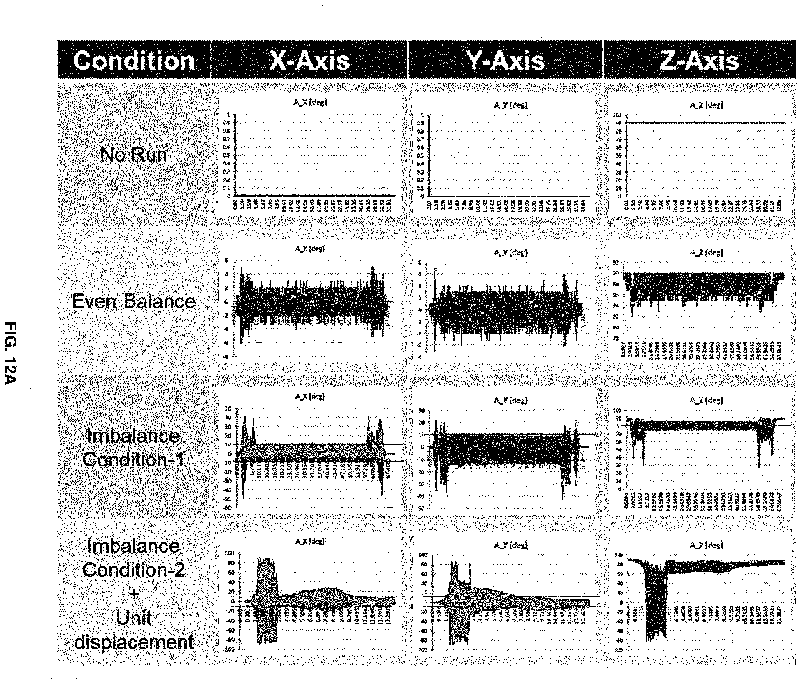

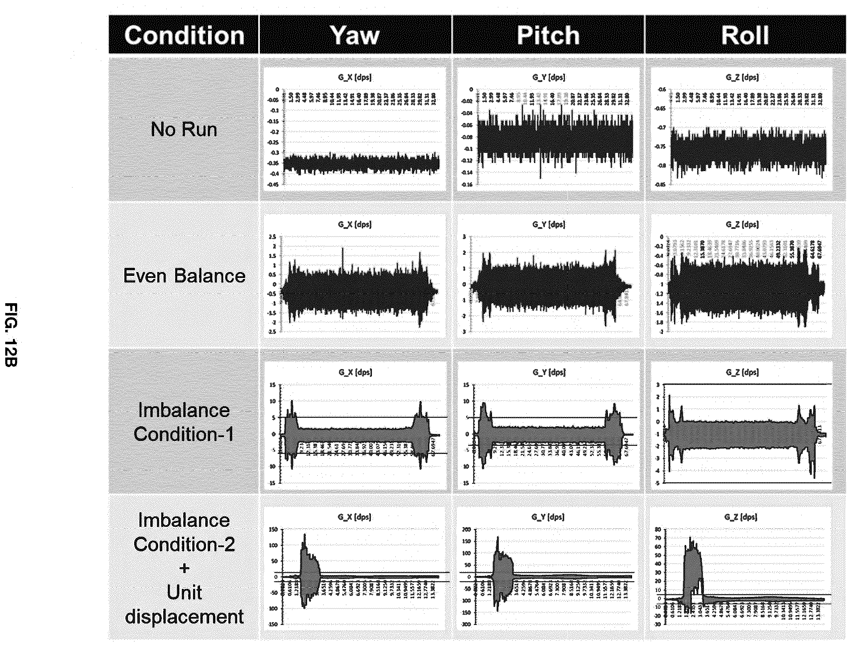

Figures 12A and 12B show example data that may be used for training a machine learning model. The data is for a centrifuge operating with a six axis sensor. The data is grouped into four states, namely:
i. Not running / idle (No Run);
ii. Operating balanced (Even balance);
iii. Operating and unbalanced (Imbalance Condition - 1); and
iv. Operating, unbalanced and moved across work surface (Imbalance Condition - 2 + Unit displacement).

Note that in figures 12A and 12B the scales on the graphs differ, because they have been automatically scaled based on the data.

Figure 12A shows acceleration data for the three directions x, y and z. At idle the acceleration in x and y directions is zero and around 90 in the z direction. The 90 in the z direction is due to the effect of gravity on the mass of the sensor element. When the instrument is in the operating state and is balanced, the acceleration in the x and y directions increases to an oscillating amount varying between approximately +/-2 and +/-4. The z-direction is similar with the variation between around 85 and 90. For the first imbalance condition the acceleration in x and y again has an oscillating value, but is now higher, oscillating between around +/-10. In the z-direction the acceleration range is largely unchanged varying between around 85 and 90. In all of the x, y and z direction for the first imbalance condition, significantly higher levels of vibration are seen at the beginning and end of the data collection period. This is due to start-up / slow-down of the motor. For example, the suspension system of the motor may have an eigenfrequency at a relatively low frequency that is passed during start-up / slow-down. In conventional instruments these larger values at these times could be a cause for an indication of a false imbalance. The second imbalance condition which also includes movement sees greater amounts of movement. For example, in the x and y directions the acceleration takes values up to around 80, and in the z direction an acceleration of -60, that is in the opposite direction to which the force of gravity is seen. This indicates the point at which the instrument loses friction and moves on the work surface.

Figure 12B shows angular velocity data which is measured in degrees per second (dps). Values of angular velocity at idle show low levels at around less than 1 dps in all three directions. At the balanced and operating condition, the values of angular velocity in the three directions remain low at less than around 2 dps. For the first imbalance condition the values increase to around 2-3dps with peaks at around 5 at the start and end. For the second imbalance condition the values have peaks at around 100 in x and y and 70 in z. The peaks in x, y and z occur at the time the instrument moves.

The vibration data shown in figures 12A and 12B, after labelling, are examples of training data that may be used in embodiments described herein. The vibration data is used to train the model to determine when there is a significant imbalance that could, will be likely to lead to movement of the instrument, and/or could result in otherwise unsafe operation such as damage to the instrument.

As well as the data shown in figures 12A and 12B, additional data may be used to train the machine learning model. Such additional data may include different surface conditions on which the instrument was placed, including a normal surface, an uneven surface, an inclined surface (such as having a 10mm include over the approximate 20-35cm width/depth of the instrument) and a slippery surface. The temperature at which the measurements were made was normal laboratory ambient temperature of 23°C.

The vibration data of figures 12A and 12B is for a centrifuge having a rotor with 24 sample locations and each sample location capable of receiving a 2 mL sample tube. In the idle condition each of the sample locations was loaded with a sample tube having a 2mL sample. The rotor was not rotated. If the rotor had been empty the same vibration data at idle would have been received. In the operating balanced condition again each of the sample locations was loaded with a sample tube having a 2mL sample. Hence, there is no uneven loading. For the first imbalance condition, a single 2 mL sample wase loaded at one position only. This loading produced a moderate imbalance as can be seen in the data.

For the second imbalance condition, the same rotor was again used with a single 2mL filled sample tube at one location. However, in this condition the centrifuge was placed on an uneven work surface.. In this condition, friction is lost with the work surface and the instrument moves across the surface.

With a 24 sample position rotor there are a very large number of possible balanced and unbalanced loadings. The number will also depend on the number of sample tubes being loaded. Collecting vibration data for all of the possible combinations would be onerous. Instruments may also be capable of receiving different rotors with different numbers of sample positions. This further improves the possible number of combinations for an instrument. However, testing of the model after building on a limited number of runs of vibration data allows the accuracy of the model to be determined. The number of varied runs can be increased for training the model until a desired accuracy is reached. However, careful selection of the types of runs added to the model is required such that the desired accuracy is achieved in an efficient manner. Selection of runs from all of the possible combinations may take into account the imbalance conditions a user is likely to implement. Multiple measurement runs and sets of vibrations data for the same loading condition may be used for the training in addition to the various different loading conditions. For some devices, and especially for some loading combinations that are at the edge of stability, different results (balanced/unbalanced) may be achieved even though the conditions appear to be the same. This may be due to different temperature, slightly different samples amounts etc.

Figure 11 indicates that a J48 architecture based classifier is used as the machine learning model. A J48 architecture based classifier is an open source Java implementation of a C4.5 algorithm, further details of which may be found at https://en.wikipedia.org/wiki/C4.5_algorithm. Other machine learning models may instead be used. For example, other machine learning models that are classifiers such as decision tree classifier type machine learning models may be used. For example, decision tree type classifiers such as random forest, random tree or decision stump, may be used. The J48 classifier was chosen because of having better accuracy than other tested models. The J48 classifier achieved 95% or greater accuracy in detecting instrument status whereas other models were lower at 90-92% or less.

During training the following error metrics were used:
- Confusion Metrics
- Accuracy
- Positive predictive value or Precision
- Sensitivity or Recall

There are two training methods available for model training. Batch processing was considered because it is able to handle large amounts of data which are processed on a routine schedule. Online processing was also considered because this handles data and transactions in real time and provides the output instantly. Batch processing is preferably used for this application, because it helps in managing large repeated work. Batch processing systems can work in offline mode and handle repeated jobs which are completely rapidly.

To avoid overfitting issues and/or high bias, the following method were used:
- Trained with more data
- Removing of irrelevant features
- Regularization method

Once trained the machine learning model will output data which may be averaged over a time window to avoid transient or errors. The time window may be 5-10 seconds. The machine learning model may output a single signal such as indicating that the instrument should be stopped. Alternatively, the machine learning model may provide multiple outputs. The multiple outputs may be specific values of the data, the results of calculations, or a mixture of specific values of the data and the ML model output. An external processing unit such as part of the instrument control unit may process the outputs and decide based on a majority voting criteria such as a check between the ML model output and a particular value or degree of freedom of the vibration data. This approach helps to avoid errors.

Once trained an instrument does not require retraining because the sensor data will not alter with respect to time/aging. However, during manufacturing the performance of the machine learning model is verified, for example as part of the instrument calibration process. Calibration may include rotational speed calibration but may also be calibration/ monitoring of critical operating voltages and current parameters at instrument and circuit board level. For a centrifuge, machine learning model calibration/verification includes changing loading conditions such as no load, balanced condition & imbalance conditions and monitor respective output.

Different models of instrument and different types of instrument may require new models to be trained. The different types of instrument that may be monitored for vibration and movement using the methods described herein include: centrifuges, mixers, mills, blenders, shakers, incubators with integrated shakers and robots.

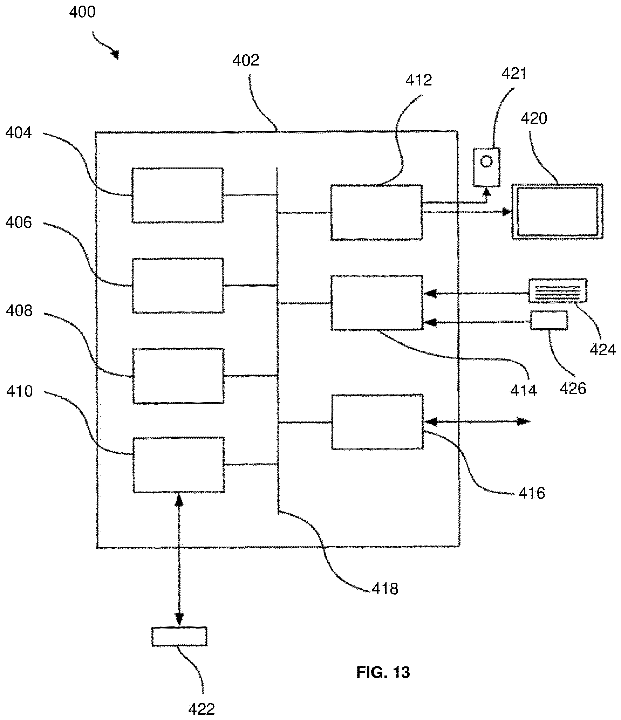

Figure 13 schematically illustrates an example of a computer system 400. Such a computer system may be used for training a machine learning model with labelled vibration data according to embodiments of the present invention. The system may also be used for determining an operating state of a laboratory instrument, although preferably this is performed by a processor and memory of the laboratory, or on-board the sensor device or chip in the laboratory instrument.

The system 400 comprises a computer 402. The computer 402 may comprise: a storage medium 404, a memory 406, a processor 148, an interface 410, a user output interface 412, a user input interface 414 and a network interface 416, which are all linked together over one or more communication buses 418.

The storage medium 404 may be any form of non-volatile data storage device such as one or more of a hard disk drive, a magnetic disc, an optical disc, a ROM, etc. The storage medium 404 may store an operating system for the processor 408 to execute in order for the computer 402 to function. The storage medium 404 may also store one or more computer programs (or software or instructions or code) such as those described herein.

The memory 406 may be any random access memory (storage unit or volatile storage medium) suitable for storing data and/or computer programs (or software or instructions or code).

The processor 408 may be any data processing unit suitable for executing one or more computer programs (such as those stored on the storage medium 404 and/or in the memory 406), some of which may be computer programs according to embodiments of the invention or computer programs that, when executed by the processor 408, cause the processor 408 to carry out a method according to an embodiment of the invention and configure the system 400 to be a system according to an embodiment of the invention. The processor 408 may comprise a single data processing unit or multiple data processing units operating in parallel or in cooperation with each other. The processor 408, in carrying out data processing operations for embodiments of the invention, may store data to and/or read data from the storage medium 404 and/or the memory 406.

The interface 410 may be any unit for providing an interface to a device 422 external to, or removable from, the computer 402. The device 422 may be a data storage device, for example, one or more of an optical disc, a magnetic disc, a solid-state-storage device, etc. The device 422 may have processing capabilities - for example, the device may be a smart card. The interface 410 may therefore access data from, or provide data to, or interface with, the device 422 in accordance with one or more commands that it receives from the processor 408.

The user input interface 414 is arranged to receive input from a user, or operator, of the system 400. The user may provide this input via one or more input devices of the system 400, such as a mouse (or other pointing device) 426 and/or a keyboard 424, that are connected to, or in communication with, the user input interface 414. However, it will be appreciated that the user may provide input to the computer 142 via one or more additional or alternative input devices (such as a touch screen). The computer 402 may store the input received from the input devices via the user input interface 414 in the memory 406 for the processor 408 to subsequently access and process, or may pass it straight to the processor 408, so that the processor 408 can respond to the user input accordingly.

The user output interface 412 is arranged to provide a graphical/visual and/or audio output to a user, or operator, of the system 400. As such, the processor 408 may be arranged to instruct the user output interface 412 to form an image/video signal representing a desired graphical output, and to provide this signal to a monitor (or screen or display unit) 420 of the system 400 that is connected to the user output interface 412. Additionally or alternatively, the processor 408 may be arranged to instruct the user output interface 412 to form an audio signal representing a desired audio output, and to provide this signal to one or more speakers 421 of the system 400 that is connected to the user output interface 412.

Finally, the network interface 416 provides functionality for the computer 402 to download data from and/or upload data to one or more data communication networks.

It will be appreciated that the architecture of the system 400 illustrated in figure 13 and described above is merely exemplary and that other computer systems 100 with different architectures (for example with fewer components than shown in figure 13 or with additional and/or alternative components than shown in figure 13) may be used in embodiments of the invention. As examples, the computer system 400 could comprise one or more of: a personal computer; a server computer; a mobile telephone; a tablet; a laptop; a television set; a set top box; a games console; other mobile devices or consumer electronics devices; etc.

In a laboratory instrument or method according to the present invention, directed to identifying an operating state of the laboratory instrument for physical processing of one or more samples, the determination of the operating state may be performed by a processor and memory similar to those of figure 13, built into the laboratory instrument, with the laboratory instrument including many or all of the features shown schematically in figure 13. For example, the user input interface and user output interface may be combined into a panel having a display and user input buttons for informing the user of an operating status as required.

The person skilled in the art will readily appreciate that various modifications and alterations may be made to the above described methods and apparatus. The modifications may be made without departing from the scope of the appended claims. For example, features and aspects of the various embodiments described herein may be combined. Steps of methods from different embodiments may be combined. The methods may be applied to different instruments that include a moving mass. The machine learning model may be trained on different data to recognise and distinguish different types of movement of the laboratory instrument. The output from the laboratory instrument may be combined with other operating parameters of the instrument to determine whether the instrument needs to be stopped. Other combinations and variations may be included in the present invention without departing from the scope of the claims.

Embodiments of the present invention are set out in the following clauses:
Clause A1. A method of identifying an operating state of a laboratory instrument for physical processing of one or more samples, the method comprising: obtaining vibration data from a vibration sensor mounted to the laboratory instrument, wherein the vibration data is obtained for each of at least two degrees of freedom and comprises acceleration data and/or angular velocity data; and determining at least one operating state of the laboratory instrument based on recognising one or more vibration patterns in the vibration data.
Clause A2. The method of clause A1, wherein the at least one operating state indicates a normal or abnormal state of operation.
Clause A3. The method of clause A2, wherein the at least one operating state indicates a state of balance or imbalance of the laboratory instrument.
Clause A4. The method of any preceding clause, wherein recognising the one or more vibration patterns in the vibration data comprises using a trained machine learning model for recognising the vibration patterns.
Clause A5. The method of clause A4, wherein determining the at least one operating state of the laboratory instrument comprises generating, from the vibration data, a feature representation of the vibration data comprising indications of one or more of: mean, energy, variance and/or peak-to-peak, for one or more of the at least two degrees of freedom, and supplying the feature representation to the trained machine learning model.
Clause A6. The method of clause A4 or clause A5, wherein the trained machine learning model determines the operating state of the laboratory instrument as one of one or more states, the one or more states including states of: idle, substantially balanced operation and operating with excess imbalance.
Clause A7. The method of any of clauses A4 to A6, wherein the trained machine learning model is a decision tree classifier type machine learning model.
Clause A8. The method of clause A7, wherein the decision tree classifier type machine learning model comprises any one of a J48 classifier, random forest, random tree or decision stump.
Clause A9. The method of any preceding clause, wherein the obtained vibration data comprises high pass filtered vibration data.
Clause A10. The method of any preceding clause, wherein the determined operating state is an indication that the laboratory instrument is moving, is about to move, or has moved, in relation to a surface it is placed on.
Clause A11. The method of any preceding clause, wherein the vibration data having at least two degrees of freedom comprises acceleration data in three orthogonal directions and angular velocity data in three orthogonal directions.
Clause A12. The method of any preceding clause, further comprising stopping operation of the laboratory instrument based on the determined operating state.
Clause B13. A method of training a vibration classification machine learning model of a laboratory instrument for processing one or more samples, the method comprising: obtaining labelled vibration data of the laboratory instrument in one or more operating states, the labelled vibration data obtained for at least two degrees of freedom; determining feature representations characterizing the labelled vibration data; and training the machine model based on the feature representations to determine an indication of the one or more operating states of the laboratory instrument.
Clause B14. The method of clause B13, wherein the at least one operating state indicates a normal or abnormal state of operation.
Clause B15. The method of clause B14, wherein the at least one operating state indicates a state of balance or imbalance of the laboratory instrument.
Clause B16. The method of any of clauses B13 to B15, wherein the labelled vibration data comprises vibration data collected during operation of the laboratory instrument in the one or more operating states.
Clause B17. The method of clause B16, wherein the labelled vibration data represent one or more runs of the instrument at each of the one or more operating states.
Clause B18. The method of any of clauses B13 to B17, wherein the vibration data obtained for the at least two degrees of freedom comprises acceleration data and/or angular velocity data.
Clause B19. The method of any of clauses B13 to B18, wherein the feature representations comprise indications of one or more of: mean, energy, variance and/or peak-to-peak, for one or more of the at least two degrees of freedom.
Clause B20. The method of any of clauses B13 to B19, wherein the one or more operating states of the laboratory instrument comprises one or more of: idle, substantially balanced operation and operating with excess imbalance.
Clause B21. The method of any of clauses B13 to B20, wherein the vibration data having at least two degrees of freedom comprises acceleration data in three orthogonal directions and angular velocity data in three orthogonal directions.
Clause B22. The method of any of clauses B13 to B21, wherein the machine learning model is a decision tree classifier type machine learning model.
Clause B23. The method of clause B22, wherein the decision tree classifier type machine learning model comprises any one of a J48 classifier, random forest, random tree or decision stump.
Clause B24. The method of any of clauses B13 to B23, wherein the obtained labelled vibration data comprises high pass filtered vibration data.
Clause C25. A laboratory instrument for receiving one or more samples and processing the one or more samples, the laboratory instrument comprising: a processing element for receiving the one or more samples, the processing element arranged to be moved by the laboratory instrument to physically process the one or more samples, wherein movement of the processing element during operation of the instrument causes vibration of the laboratory instrument; a vibration sensor configured to detect vibration of the laboratory instrument in at least two degrees of freedom; and a processor configured to perform the method of any of clauses A1 to A12 or B13 to B24.
Clause C26. The laboratory instrument of clause C25, wherein the processing element is arranged to be moved by the laboratory instrument in an oscillating or reciprocating action to physically process the sample.
Clause C27. The laboratory instrument of clause C25 or clause C26, wherein the vibration sensor comprises a gyroscope and/or an accelerometer.
Clause C28. The laboratory instrument of clause C27, wherein the at least two degrees of freedom comprise: acceleration data in at least two orthogonal directions; angular velocity data in at least two orthogonal directions; or acceleration data in one direction and angular velocity data in one direction.
Clause C29. The laboratory instrument of any of clauses C25 to C28, wherein the multi-axis vibration sensor is a MEMS sensor.
Clause C30. The laboratory instrument of any of clause C25 to C29, wherein the laboratory instrument is any of: a centrifuge, a shaker, a mixer, a mill, a blender, an incubator with integrated shaker, a rotary tumbler, and a robot.
Clause D31. A computer-readable medium storing instructions which, when executed by a processor, causes the processor to carry out a method according to any of clauses A1 to A12 or B13 to B24.

## Claims

1. A method of identifying an operating state of a laboratory instrument for physical processing of one or more samples, the method comprising:
obtaining vibration data from a vibration sensor mounted to the laboratory instrument, wherein the vibration data is obtained for each of at least two degrees of freedom and comprises acceleration data and/or angular velocity data; and
determining at least one operating state of the laboratory instrument based on recognising one or more vibration patterns in the vibration data.

2. The method of claim 1, wherein the at least one operating state indicates a normal or abnormal state of operation, or the at least one operating state indicates a state of balance or imbalance of the laboratory instrument.

3. The method of any preceding claim, wherein recognising the one or more vibration patterns in the vibration data comprises using a trained machine learning model for recognising the vibration patterns.

4. The method of claim 3, wherein determining the at least one operating state of the laboratory instrument comprises generating, from the vibration data, a feature representation of the vibration data comprising indications of one or more of: mean, energy, variance and/or peak-to-peak, for one or more of the at least two degrees of freedom, and supplying the feature representation to the trained machine learning model.

5. The method of claim 3 or claim 4, wherein the trained machine learning model determines the operating state of the laboratory instrument as one of one or more states, the one or more states including states of: idle, substantially balanced operation and operating with excess imbalance.

6. The method of any of claims 3 to 5, wherein the trained machine learning model is a decision tree classifier type machine learning model.

7. The method of claim 6, wherein the decision tree classifier type machine learning model comprises any one of a J48 classifier, random forest, random tree or decision stump.

8. The method of any preceding claim, wherein the obtained vibration data comprises high pass filtered vibration data.

9. The method of any preceding claim, wherein the determined operating state is an indication that the laboratory instrument is moving, is about to move, or has moved, in relation to a surface it is placed on.

10. The method of any preceding claim, wherein the vibration data having at least two degrees of freedom comprises acceleration data in three orthogonal directions and angular velocity data in three orthogonal directions.

11. The method of any preceding claim, further comprising stopping operation of the laboratory instrument based on the determined operating state.

12. A method of training a vibration classification machine learning model of a laboratory instrument for processing one or more samples, the method comprising:
obtaining labelled vibration data of the laboratory instrument in one or more operating states, the labelled vibration data obtained for at least two degrees of freedom;
determining feature representations characterizing the labelled vibration data; and
training the machine model based on the feature representations to determine an indication of the one or more operating states of the laboratory instrument.

13. The method of claim 12, wherein the at least one operating state indicates a normal or abnormal state of operation, or the at least one operating state indicates a state of balance or imbalance of the laboratory instrument.

14. A laboratory instrument for receiving one or more samples and processing the one or more samples, the laboratory instrument comprising:
a processing element for receiving the one or more samples, the processing element arranged to be moved by the laboratory instrument to physically process the one or more samples, wherein movement of the processing element during operation of the instrument causes vibration of the laboratory instrument;
a vibration sensor configured to detect vibration of the laboratory instrument in at least two degrees of freedom; and
a processor configured to perform the method of any of claims 1 to 13.

15. A computer-readable medium storing instructions which, when executed by a processor, causes the processor to carry out a method according to any of claims 1 to 13.
